Europäisches Patentamt

European Patent Office

Office européen des brevets

(19)

(11) Veröffentlichungsnummer: **0 006 398**
**A1**

(12) # EUROPÄISCHE PATENTANMELDUNG

(21) Anmeldenummer: 79890016.3

(22) Anmeldetag: 13.06.79

(51) Int. Cl.³: **C 21 C 5/40, F 27 D 17/00**

(30) Priorität: 14.06.78 AT 4331/78

(43) Veröffentlichungstag der Anmeldung: 09.01.80
Patentblatt 80/1

(84) Benannte Vertragsstaaten: **BE DE FR GB IT LU SE**

(71) Anmelder: **VOEST-ALPINE Aktiengesellschaft,
Werksgelände, A-4010 Linz (AT)**

(72) Erfinder: **Laimer, Friedrich, Ing., Kerngraben 8, A-4320
Perg (AT)**
Erfinder: **Moser, Peter, Ing., Speristrasse 3, A-4045
Linz (AT)**

(74) Vertreter: **Wolfram, Gustav, Dipl.Ing., Schwindgasse 7
P.O.Box 205, A-1041 Wien (AT)**

(54) **Verfahren zum Ableiten des beim Chargieren eines metallurgischen Gefässes aufsteigenden Rauches bzw. Abgases
sowie Einrichtung zur Durchführung des Verfahrens.**

(57) Belm Chargieren eines metallurgischen Gefässes, wie
eines Konverters (1), wird der aufsteigende Rauch bzw.
das Abgas in einer Abzugshaube (8, 9), an welche eine
Abzugsleitung (10) angeschlossen ist, aufgefangen und
abgesaugt.

Zwecks Vermeidung eines unkontrollierten Austrittes
von Rauch und Abgas durch Zwischenräume (13) bzw.
Spalte zwischen der Abzugshaube und Anlageteilen werden freie Ränder (12, 19) der Abzugshaube gegenüber
dem Hallenluftraum durch einen Gasvorhang, vorteilhaft
von Pressluft, Stickstoff oder Dampf, abgedichtet.

EP 0 006 398 A1

- 1 -

Verfahren zum Ableiten des beim Chargieren eines metallurgischen Gefäßes aufsteigenden Rauches bzw. Abgases sowie
Einrichtung zur Durchführung des Verfahrens

Die Erfindung betrifft ein Verfahren zum Ableiten des
beim Chargieren eines metallurgischen Gefäßes aufsteigenden Rauches bzw. Abgases in mindestens eine Abzugsleitung
einer Abzugshaube, während das zu chargierende Gut aus
einem Chargierbehälter, wie einer kippbaren Schrottschurre,
in das metallurgische Gefäß gefüllt wird, sowie Einrichtungen zur Durchführung des Verfahrens.

Beim Chargieren eines metallurgischen Gefäßes, insbesondere eines Stahlwerkskonverters mit Schrott und/oder Roheisen kommt es zu einer starken Rauch- und Abgasentwicklung. Durch die Schrägstellung des Konverters beim Chargieren können die Abgase nicht mehr durch den Hauptkaminzug, der zur Ableitung der Abgase während des Blasvorganges dient, erfaßt werden. Die hohen Gastemperaturen
beim Chargieren bewirken einen starken Auftrieb und die
Abgase und der Rauch steigen rasch bis zum Dach hoch, wo
sie durch Öffnungen ins Freie treten und eine Belastung
für die Umwelt darstellen.

Um den Rauch bzw. die Abgase abzuleiten, werden im Bereich
oberhalb der Mündung des in Chargierstellung gekippten
Konverters ein- oder mehrteilige Abzugshauben montiert, aus der die Abgase über mindestens eine Abzugsleitung mittels eines Gebläses abgesaugt werden. Dem Gebläse kann eine Filteranlage zur Abscheidung von Festteilchen vorgeschaltet sein.

Beim Betrieb dieser Einrichtungen ist es unvermeidlich, daß Zwischenräume bzw. Spalte zwischen der Abzugshaube und Anlageteilen nicht im Absaugbereich liegen, mit der Folge, daß Teile der Emissionen in die Halle strömen. Solche Zwischenräume sind zwischen dem unteren Rand der Abzugshaube und dem Chargierbehälter vorhanden, wobei bei Verwendung einer Schrottschurre als Chargierbehälter eine Kaminwirkung des Hohlraumes der Schurre das Austreten der Emissionen in die Halle verstärkt. Weitere unvermeidbare Zwischenräume, durch die Rauch und Abgase zum Hallenluftraum austreten, ergeben sich dann, wenn die Abzugshaube mehrteilig ausgebildet ist und ein Teil der Haube in und aus der Chargierstellung verfahrbar ist. Auch beim Chargieren mit Hilfe eines Kranes müssen für den Durchtritt der Kranseile durch die Abzugshaube Ausnehmungen in der Haube vorhanden sein, durch die Rauchaustritt stattfinden kann.

Die Erfindung bezweckt die Vermeidung der geschilderten Nachteile und Schwierigkeiten und stellt sich die Aufgabe, ein Verfahren und Einrichtungen zu schaffen, mit deren Hilfe ein unkontrollierter Austritt von Rauch und Abgasen während des Chargierens vermieden und eine sichere Dichtung gewährleistet wird.

Diese Aufgabe wird erfindungsgemäß bei einem Verfahren der eingangs beschriebenen Art dadurch gelöst, daß freie Ränder der Abzugshaube gegenüber dem Hallenluftraum durch einen Gasvorhang, vorteilhaft aus Preßluft, Stickstoff oder Dampf, abgedichtet werden.

Die Erfindung umfaßt verschiedene Einrichtungen zur Durchführung des Verfahrens. Eine bevorzugte Einrichtung zur Durchführung des Verfahrens mit einer an eine Abzugsleitung angeschlossenen Abzugshaube ist dadurch gekennzeichnet, daß eine Reihe von Düsen entlang mindestens einer einen freien Rand aufweisenden Wand der Abzugshaube angeordnet ist, deren Strahlrichtung parallel zur Wand und über deren freien Rand hinaus gerichtet ist.

Für eine mehrteilige Abzugshaube, bei der ein Teil ortsfest am Stand des metallurgischen Gefäßes montiert und an eine Abzugsleitung angeschlossen ist und ein weiterer Teil der Abzugshaube am Krangehänge angeordnet und mit diesem verfahrbar ist, ist es zweckmäßig, daß am verfahrbaren Teil der Abzugshaube eine Reihe von Düsen mit horizontaler Strahlrichtung angeordnet ist, wobei der mit Hilfe der Düsen erzeugte Gasvorhang den Zwischenraum zwischen dem verfahrbaren und dem ortsfesten Teil der Abzugshaube überbrückt und abdichtet.

Bei einer anderen, insbesondere bei Verwendung von Schrottschurren besonders vorteilhaften Ausführungsform ist am verfahrbaren Teil der Abzugshaube an der der Halle zugewendeten Seitenwand eine Reihe von Düsen mit vertikaler Strahlrichtung angeordnet, wobei der damit erzeugte Gasvorhang den Zwischenraum zwischen dem unteren Rand des Teiles der Abzugshaube und dem Chargierbehälter überbrückt und abdichtet.

Eine weitere bevorzugte Einrichtung zur Durchführung des erfindungsgemäßen Verfahrens mit einer ortsfesten, die Mündung des in Chargierstellung befindlichen Konverters und den Chargierbehälter überdeckenden, an eine Abzugsleitung angeschlossenen Abzugshaube ist dadurch gekennzeichnet, daß an der der Halle zugewendeten Seitenwand der Abzugshaube eine Reihe von Düsen mit vertikaler Strahlrichtung angeordnet ist, wobei der damit erzeugte Gasvorhang den Zwischenraum zwischen dem unteren Rand der Abzugshaube und dem Chargierbehälter überbrückt und abdichtet.

Bei einer anderen Ausführungsform, bei der mindestens eine Ausnehmung vorgesehen ist, in die und aus der den Chargierbehälter führende Trägereinrichtungen eines Kranes ein- und ausfahrbar sind, ist an der Ausnehmung eine Reihe von Düsen mit horizontaler Strahlrichtung vorgesehen, wobei der erzeugte Gasvorhang die Ausnehmung überbrückt und abdichtet.

Zum genauen Ausrichten der Strahlrichtung, insbesondere zwecks sicherer Überbrückung der Ausnehmung, sind vorteilhaft die Düsen verstellbar an der Wand der Abzugshaube angeordnet.

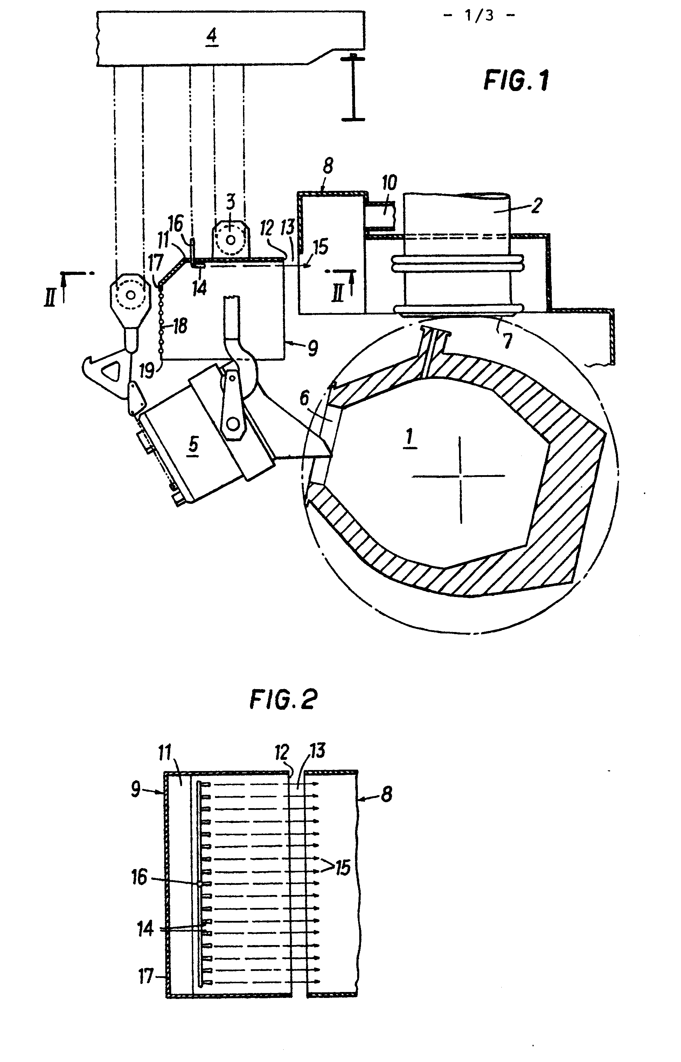

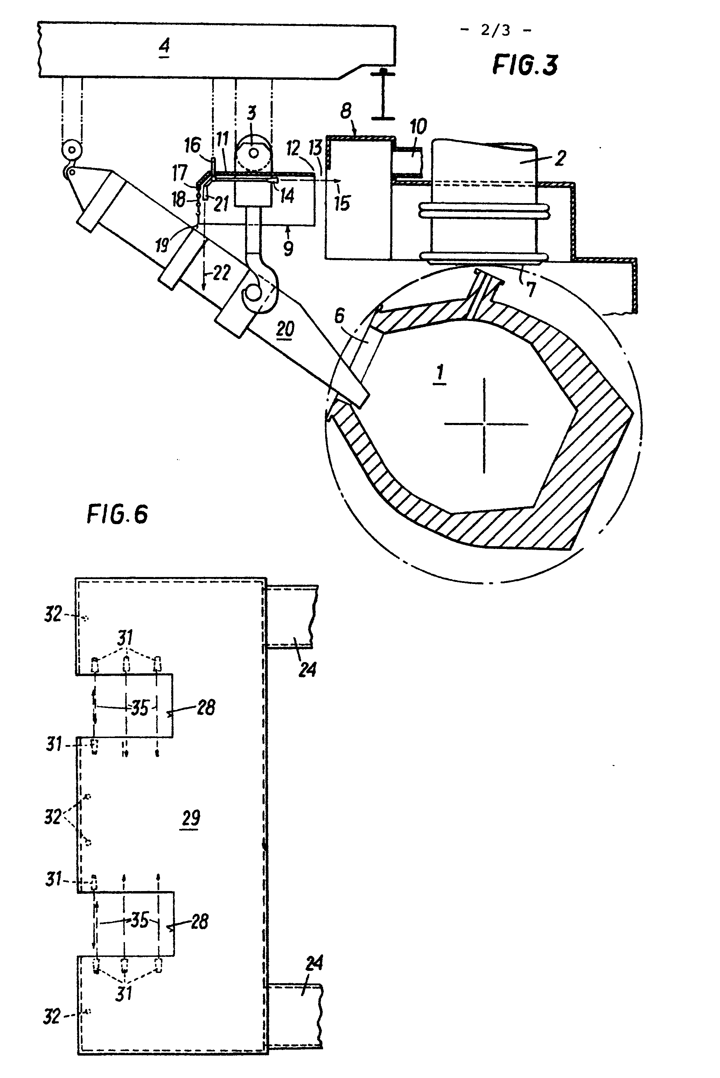

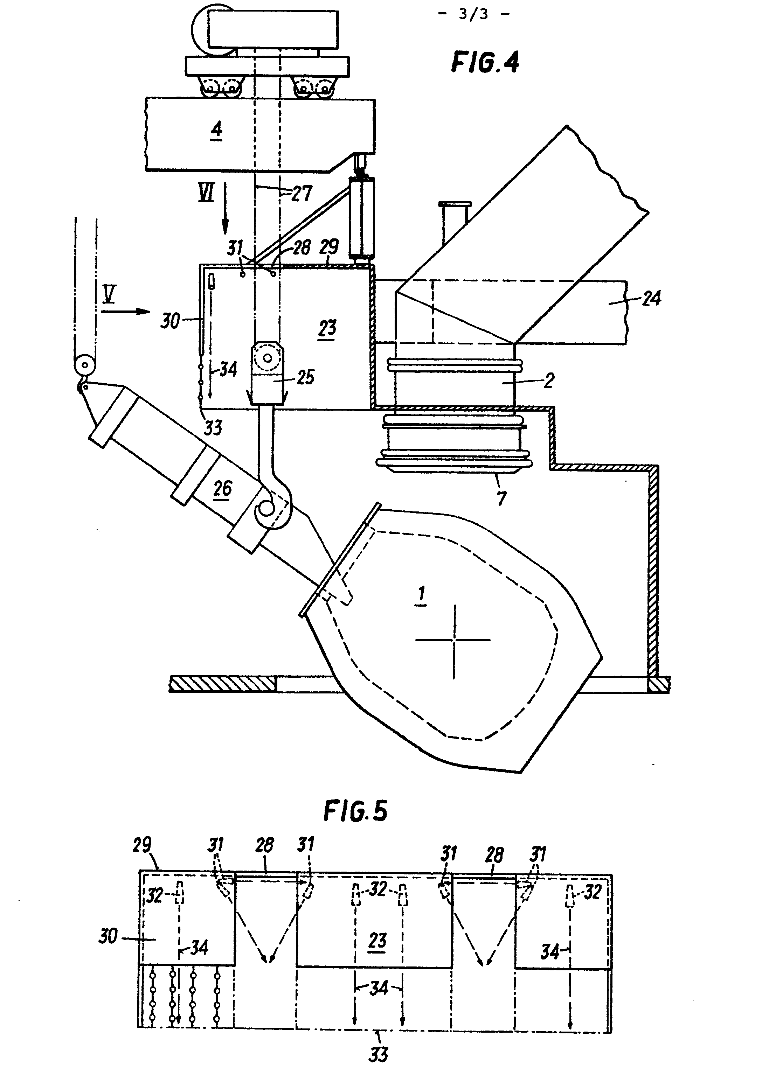

Die Erfindung ist an mehreren Ausführungsbeispielen in der Zeichnung näher erläutert, wobei Fig. 1 einen Konverterstand mit zweiteiliger Abdeckhaube im Vertikalschnitt während des Chargierens mit Roheisen und Fig. 2 einen Schnitt nach der Linie II-II der Fig. 1 zeigen. In Fig. 3 ist eine abgeänderte Ausführungsform eines Konverterstandes in zu Fig. 1 analoger Darstellung, ebenfalls mit zweiteiliger Haube, während des Chargierens mit Schrott gezeigt. Fig. 4 veranschaulicht eine weitere Ausführungsform eines Konverterstandes mit einteiliger Haube, ebenfalls in zu Fig. 1 analoger Darstellung, während des Chargierens mit Schrott; die Fig. 5 und 6 sind Ansichten in Richtung der Pfeile V bzw. VI der Fig. 4.

In Fig. 1 ist mit 1 ein Stahlwerkskonverter bezeichnet, der unterhalb eines Hauptkaminzuges 2, der zum Absaugen der beim Blasvorgang entstehenden Abgase dient, kippbar gelagert ist. Zum Chargieren mittels eines an einem Krangehänge 3 eines Kranes 4 hängenden Chargierbehälters 5

- 5 -

0006398

wird der Konverter 1 in die in Fig. 1 dargestellte Lage gekippt, wodurch seine Mündung 6 seitlich neben die Öffnung 7 des Hauptkaminzuges 2 zu liegen kommt.

Zum Absaugen der beim Chargiervorgang anfallenden Abgase ist eine den Chargierbehälter 5 und die Mündung 6 des Konverters überdeckende zweigeteilte Abzugshaube vorgesehen, die aus dem ortsfesten Teil 8 und dem am Krangehänge 3 befestigten und mit diesem verfahrbaren Teil 9 gebildet ist. In den ortsfesten Teil münden Abzugsleitungen 10 ein.

Der verfahrbare Teil 9 der Abzugshaube weist an seiner horizontalen, die Abzugshaube nach oben abschließenden Wand 11 einen freien Rand 12 auf. Zwischen dem ortsfesten Teil 8 und dem Rand 12 des verfahrbaren Teiles 9 der Abzugshaube ist ein freier Zwischenraum 13 vorhanden, der deswegen nicht geschlossen werden kann, da während des Chargiervorganges vertikale und horizontale Bewegungen des Chargierbehälters 5 und damit des Krangehänges 3 durchgeführt werden müssen.

Erfindungsgemäß ist am verfahrbaren Teil 9 der Abzugshaube eine Reihe von Düsen 14 angeordnet, die eine horizontale Strahlrichtung aufweisen, wie durch den Pfeil 15 angedeutet ist. Auf diese Weise wird ein Gasvorhang gebildet, der den Spalt 13 überbrückt und die Haube gegenüber dem Hallenluftraum dichtet. Die Düsen sind mit Schlauchleitungen 16 an eine Quelle für Preßluft, Stickstoff oder Dampf anschließbar, wobei die Versorgung vom Kran 4 aus erfolgt. Durch Strömungs- und Injektorwirkung des Gasvorhanges werden die Abgase den Abzugsleitungen 10 zugeleitet. Die Düsen 14 sind verstellbar angeordnet und können je nach Bedarf in ihrer Intensität eingestellt werden.

0006398

Die dem Konverter abgewandte Seitenwand 17 des Teiles 9
der Abzugshaube ist aus aneinander angelenkten Blechplättchen nach der Art eines Kettenvorhanges 18 gebildet,
sodaß ein Anstoßen beim Kippen des Chargierbehälters an
dieser Seitenwand keine Beschädigungen verursacht. Der
untere Rand dieser Seitenwand 17 ist mit 19 bezeichnet.

Bei der Ausführungsform nach Fig. 3 wird als Chargierbehälter für Schrott eine Schurre 20 verwendet, deren halbrohrförmiger Innenraum, der über die Abzugshaube infolge
der großen Baulänge der Schrottschurre hinausragt, eine
Kaminwirkung für die aus der Konvertermündung 6 aufsteigenden Emissionen ausübt. Um diese Kaminwirkung zu unterbinden, wird zusätzlich zu einer Anordnung der Düsenreihe
14 gemäß Fig. 1 und 2 eine Düsenreihe 21 mit vertikaler
Strahlrichtung parallel zur Seitenwand 17 vorgesehen, wie
durch den Pfeil 22 angedeutet ist.

Die eine horizontale Strahlrichtung 15 aufweisenden Düsen
14 sind gemäß der Ausführungsform nach Fig. 3 im Krangehänge 3 angeordnet, da hier das Krangehänge zum Teil
unterhalb der die Abzugshaube nach oben abschließenden
Wand 11, also im Inneren der Abzugshaube, angeordnet ist.

Die Ausführungsform nach Fig. 4 zeigt einen Konverterstand mit einer einteiligen, ortsfesten Abzugshaube 23,
die eine Abzugsleitung 24 aufweist. Die Chargierung erfolgt mittels eines an einem Krangehänge 25 verfahrbaren
Chargierbehälters, hier eine Schrottschurre 26, wobei
die Trageinrichtungen, nämlich die Seile 27 des Kranes,
durch eine Ausnehmung 28 in der Decke 29 und in der
Seitenwand 30 ein- und ausfahrbar sind. Zum Überbrücken
und Dichten des Zwischenraumes zwischen dem unteren Rand
33 der Seitenwand 30 und der Schurre 26 ist eine Reihe
von Düsen 32 mit vertikaler Strahlrichtung 34 vorgesehen.
Zusätzlich ist auch zum Überbrücken und Abdichten der Ausnehmungen 28 eine Reihe von Düsen 31 mit einstellbarer Strahlrichtung 35 vorgesehen.

Patentansprüche:

1. Verfahren zum Ableiten des beim Chargieren eines metallurgischen Gefäßes aufsteigenden Rauches bzw. Abgases in mindestens eine Abzugsleitung einer Abzugshaube, während das zu chargierende Gut aus einem Chargierbehälter, wie einer kippbaren Schrottschurre, in das metallurgische Gefäß gefüllt wird, dadurch gekennzeichnet, daß freie Ränder der Abzugshaube gegenüber dem Hallenluftraum durch einen Gasvorhang, vorteilhaft aus Preßluft, Stickstoff oder Dampf, abgedichtet werden.

2. Einrichtung zur Durchführung des Verfahrens nach Anspruch 1, mit einer an eine Abzugsleitung angeschlossenen Abzugshaube, dadurch gekennzeichnet, daß eine Reihe von Düsen (14, 21; 31, 32) entlang mindestens einer einen freien Rand (12, 19; 33) aufweisenden Wand (11, 17; 29, 30) der Abzugshaube (8, 9; 23) angeordnet ist, deren Strahlrichtung (15, 22; 34, 35) parallel zur Wand und über deren freien Rand (12, 19; 33) hinaus gerichtet ist.

3. Einrichtung nach Anspruch 2, mit einer mehrteiligen Abzugshaube, bei der ein Teil ortsfest am Stand des metallurgischen Gefäßes montiert und an eine Abzugsleitung angeschlossen ist und ein weiterer Teil der Abzugshaube am Krangehänge angeordnet und mit diesem verfahrbar ist, dadurch gekennzeichnet, daß am verfahrbaren Teil (9) der Abzugshaube eine Reihe von Düsen (14) mit horizontaler Strahlrichtung (15) angeordnet ist, wobei der mit Hilfe der Düsen (14) erzeugte Gasvorhang den Zwischenraum (13) zwischen dem verfahrbaren (9) und dem ortsfesten (8) Teil der Abzugshaube überbrückt und abdichtet (Fig. 1).

4. Einrichtung nach Anspruch 3, dadurch gekennzeichnet, daß am verfahrbaren Teil (9) der Abzugshaube an der der Halle zugewendeten Seitenwand (17) eine Reihe von Düsen (21) mit vertikaler Strahlrichtung (22) angeordnet ist, wobei ·der damit erzeugte Gasvorhang den Zwischenraum zwischen dem unteren Rand (19) des Teiles (9) der Abzugshaube und dem Chargierbehälter (20) überbrückt und abdichtet (Fig. 3).

5. Einrichtung nach Anspruch 2, mit einer ortsfesten, die Mündung des in Chargierstellung befindlichen Konverters und den Chargierbehälter überdeckenden, an eine Abzugsleitung angeschlossenen Abzugshaube, dadurch gekennzeichnet, daß an der der Halle zugewendeten Seitenwand (30) der Abzugshaube eine Reihe von Düsen (32) mit vertikaler Strahlrichtung (34) angeordnet ist, wobei der damit erzeugte Gasvorhang den Zwischenraum zwischen dem unteren Rand (33) der Abzugshaube (23) und dem Chargierbehälter (26) überbrückt und abdichtet (Fig. 4).

6. Einrichtung nach Anspruch 5, wobei eine Ausnehmung vorgesehen ist, in die und aus der den Chargierbehälter führende Trägereinrichtungen eines Kranes ein- und ausfahrbar sind, dadurch gekennzeichnet, daß an der Ausnehmung (28) eine Reihe von Düsen (31) vorgesehen ist, wobei der erzeugte Gasvorhang die Ausnehmung (28) überbrückt und abdichtet (Fig. 4).

7. Einrichtung nach den Ansprüchen 2 bis 6, dadurch gekennzeichnet, daß die Düsen (31) verstellbar an der Wand der Abzugshaube (23) angeordnet sind (Fig. 4).

FIG.1

FIG.2

**FIG.3**

**FIG.6**

## FIG.4

## FIG.5

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | DE - A - 1 433 516 (DEMAG)<br><br>* Figur 3; Patentansprüche 1,2,13; Seite 12, Zeilen 5-19 *<br><br>-- <br><br>DE - A - 2 553 180 (MASCHINEN-FABRIK BETH)<br><br>* Figuren 1,2; Patentansprüche 1-4 *<br><br>---- | 1,2<br><br><br><br><br><br>1,2 | C 21 C 5/40<br>F 27 D 17/00 |

**RECHERCHIERTE SACHGEBIETE (Int. Cl.²)**

C 21 C 5/40
C 21 C 5/38
F 27 D 17/00
B 22 D 45/00
B 08 B 15/02
F 27 B 3/18
5/12
3/05

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-09-1979 | ELSEN |

EPA form 1503.1  06.78